# EUROPÄISCHE PATENTANMELDUNG

(11) **EP 0 654 850 A2**
(43) Veröffentlichungstag der Anmeldung: **24.05.1995**
(21) Anmeldenummer: 94117698.4
(22) Anmeldetag: 09.11.1994
(51) Int. Cl.: H01R 9/24, H01R 9/09

(54) **Anschlussklemme für eine Leiterplatte**

(30) Priorität: 22.11.1993 DE 4339723
(71) Anmelder: SIEMENS AKTIENGESELLSCHAFT, D-80333 München (DE)
(72) Erfinder: Hentschel, Mona, Dipl.-Ing., D-91085 Weisendorf (DE); Kurze, Bernd, Dipl.-Ing., D-91056 Erlangen (DE); Hecht, Franz, Dipl.-Ing.(FH), D-91074 Herzogenaurach (DE)

(57) **Zusammenfassung**

Die Erfindung bezieht sich auf eine Anschlußklemme (2), bestehend aus einem Klemmenträger (4) und einer Klemmstelle (6), die einen Klemmkörper, einen Druckübertragungsteil und eine Klemmschraube (8) aufweist, und auf eine mehrpolige Anschlußklemme (2). Erfindungsgemäß ist das Druckübertragungsteil einer Klemmstelle (6) mit einer Stromschiene elektrisch leitend verbunden, wobei diese Stromschiene in einem Basisteil (16) des Klemmenträgers (4) geführt ist und deren freies Ende aus diesem Basisteil (16) seitwärts herausragt. Somit erhält man eine Anschlußklemme (2) bzw. eine mehrpolige Anschlußklemme (2), bei deren Verwendung keine zusätzliche Montageteile und stromführende Teile mehr benötigt werden.

## Beschreibung

Die Erfindung bezieht sich auf eine Anschlußklemme, bestehend aus einem Klemmenträger und einer Klemmstelle, die einen Klemmkörper, einen Druckübertragungsteil und eine Klemmschraube aufweist, und auf eine mehrpolige Anschlußklemme.

Anschlußklemmen sind Klemmen, die für den äußeren Anschluß (Netzanschluß) von Einzelgeräten oder Gerätekombinationen benutzt werden. Klemmen für den Anschluß von Erdungs- und Schutzleitern gehören zu den Anschlußklemmen.

Im Handel sind Schaltanlagen-Reihenklemmen erhältlich, die zur Aufnahme von Anschlußkräften auf einer Hutschiene befestigt werden. Diese Hutschiene ist wiederum auf einer Tragplatte oder direkt am Gehäuse eines Gerätes befestigt. Die elektrische Verbindung von der Klemme zu einer Leiterplatte des Gerätes erfolgt mittels Leitungen, die einerseits an der Reihenklemme angeschraubt werden und andererseits mit der Leiterplatte verlötet sind. Diese Leitungen können auch mit der Leiterplatte mittels einer Leiterplatten-Anschlußklemme verschraubt sein.

Derartige im Handel erhältliche Leiterplatten-Anschlußklemmen werden auch Print-Klemmenblöcke genannt. Diese mehrpoligen Print-Klemmenblöcke können auch auf eine Sub-Leiterplatte eingelötet werden. Diese Sub-Leiterplatte wird am Gehäuse eines Gerätes befestigt, wobei die elektrische Verbindung zu einer Leiterplatte mittels Lötstiften oder Steckverbinder erfolgt.

Diese Reihenklemmen und Leiterplatten-Anschlußklemmen enthalten jeweils mehrere Klemmstellen, an denen jeweils ein Leiter mechanisch befestigt und elektrisch verbunden ist. Zur Klemmstelle gehören alle Teile, die zur Aufrechterhaltung der Kontaktkraft erforderlich sind, wie z.B. Klemmkörper mit Muttergewinde, Druckstück und Klemmschraube. Der Klemmkörper ist das Einzelteil, das zum Anschluß des Leiters dient. Es hat in der Regel auch die Aufgabe, die übrigen Einzelteile einer Klemmstelle zusammenzuhalten. Das Druckstück bzw. Druckübertragungsteil, beispielsweise eine Anschlußscheibe, ein Klemmbügel, eine Klemmlasche oder ein Druckstück, ist das Einzelteil, das die Kontaktkraft auf den Leiter überträgt. Der Klemmenträger, beispielsweise ein Sockel, ein Gehäuse oder eine Grundplatte, ist das Einzelteil, das die gesamten Klemmstellen und gegebenenfalls die Befestigungseinrichtungen trägt. Es besteht üblicherweise aus isolierendem Werkstoff.

Bei der Verwendung von Schaltanlagen-Reihenklemmen bzw. von Leiterplatten-Anschlußklemmen bei Einzelgeräten sind zusätzliche Montageteile zur Befestigung der Klemmen notwendig, wodurch die Anschlußtechnik montageintensiv und aufwendig ist, insbesondere dann, wenn die Leiterplatte des Gerätes senkrecht zur Hutschiene der Schaltanlagen-Reihenklemme bzw. zur Sub-Leiterplatte der Leiterplatten-Anschlußklemme steht.

Der Erfindung liegt nun die Aufgabe zugrunde, eine Anschlußklemme bzw. eine mehrpolige Anschlußklemme anzugeben, bei deren Verwendung keine zusätzlichen Montageteile benötigt werden.

Diese Aufgabe wird erfindungsgemäß dadurch gelöst, daß das Druckübertragungsteil einer Klemmstelle mit einer Stromschiene elektrisch leitend verbunden ist, wobei diese Stromschiene in einem Basisteil des Klemmenträgers geführt ist und deren freies Ende aus diesem Basisteil seitwärts herausragt. Mittels diesem aus dem Basisteil herausragenden Ende der Stromschiene erfolgt die unmittelbare Kontaktierung der Anschlußklemme mit einer Leiterplatte. Dabei ist es unerheblich, ob die Leiterplatte senkrecht zur Frontseite des Gehäuses des elektrischen Gerätes oder räumlich parallel dazu angeordnet ist. Durch die direkte Kontaktierung entfällt die Verbindungsleitung pro Klemmstelle und die Hutschiene bzw. die Sub-Leiterplatte.

Zur Entlastung der Lötstelle weist der Klemmenträger einer vorteilhaften Anschlußklemme an der Seite des herausragenden freien Endes der Stromschiene wenigstens eine Anschraubstelle auf. Eine derartige Anschraubstelle besteht beispielsweise aus einer Tasche, in der eine Gewindemutter eingelegt ist.

Um die Lötstelle von schädlichen Schraubendreherkräften zu schützen, weist bei einer weiteren vorteilhaften Anschlußklemme die Ober-und/oder Unterseite des Klemmenträgers eine Nut auf. Mittels dieser Nut bzw. Nuten kann die erfindungsgemäße Anschlußklemme auf ein Montageblech des elektrischen Gerätes geschoben werden.

Bei einer weiteren vorteilhaften Ausführungsform ist das freie Ende der Stromschiene in Form von zwei benachbarten Lötpins ausgestaltet. Dadurch können die auf der Leiterplatte vorhandenen Löcher zur direkten Kontaktierung verwendet werden, und die Strombelastung der eingelöteten Lötpins ist geringer.

Bei der Ausgestaltung und Verlegung der Stromschiene im Basisteil des Klemmenträgers wird die normmäßige Luft- und Kriechstrecke eingehalten.

Bei einer mehrpoligen Anschlußklemme, die mehrere erfindungsgemäße Anschlußklemmen aufweist, sind die Stromschienen im Basisteil räumlich parallel geführt, so daß deren freie Enden seitwärts aufgereiht aus diesem Basisteil des Klemmenträgers herausragen. Somit wird die mehrpolige Anschlußklemme mittels mehrere Lötpins mit der Leiterplatte des Gerätes elektrisch leitend verbunden, wobei sich das Gewicht der mehrpoligen Anschlußklemme auf diese mehreren Lötpins verteilt (geringere Belastung eines jeden Lötpins).

Bei einer vorteilhaften Ausgestaltung einer mehr poligen Anschlußklemme ragt eine Stromschiene als Anschlußschienenteil der mehrpoligen Anschlußklemme aus dem Klemmenträger heraus. Mittels diesem Anschlußschienenteil wird die mehrpolige Anschlußklemme am Gehäuse eines elektrischen Gerätes fixiert und befestigt, wobei dieser Anschlußschienenteil gleichzeitig als Masse-Verbindung von einer Klemmstelle zum Gehäuse verwendet wird.

Bei einer weiteren vorteilhaften mehrpoligen Anschlußklemme sind die einzelnen Klemmstellen der Anschlußklemme jeweils durch einen Steg voneinander räumlich getrennt. Somit sind die Anschlußstellen der Leitungen sowie auch die Klemmschrauben handrückensicher ausgeführt.

Zur weiteren Erläuterung der Erfindung auf die Zeichnung Bezug genommen, in der eine Ausführungsform einer mehrpoligen Anschlußklemme schematisch veranschaulicht ist.
- Figur 1: zeigt eine perspektivische Ansicht von schräg oben einer erfindungsgemäßen 6-poligen Anschlußklemme, wobei in
- Figur 2: deren Ansicht von schräg unten dargestellt ist, die
- Figur 3: zeigt eine perspektivische Ansicht von schräg oben einer erfindungsgemäßen 4-poligen Anschlußklemme, wobei in
- Figur 4: deren Ansicht von schräg unten dargestellt ist, und die
- Figur 5: zeigt die Verwendung einer 6-poligen und einer 4-poligen Anschlußklemme bei einem elektrischen Gerät.

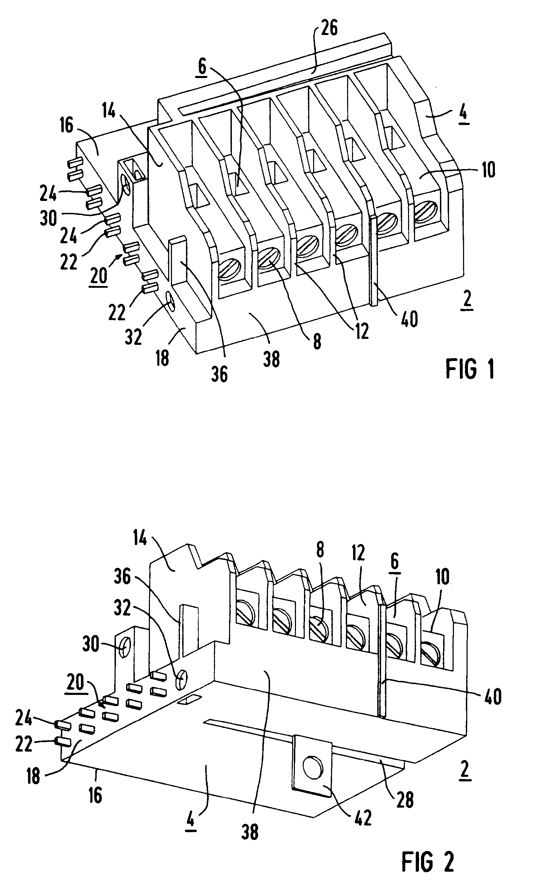

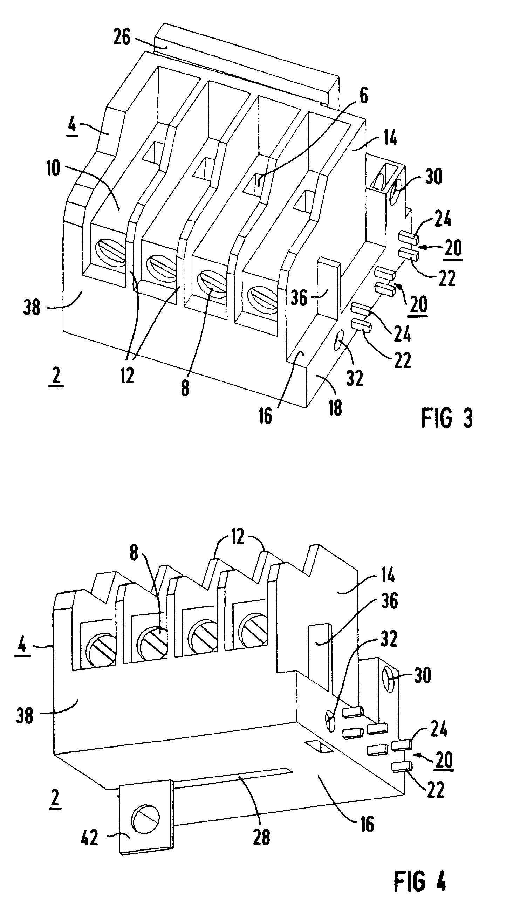

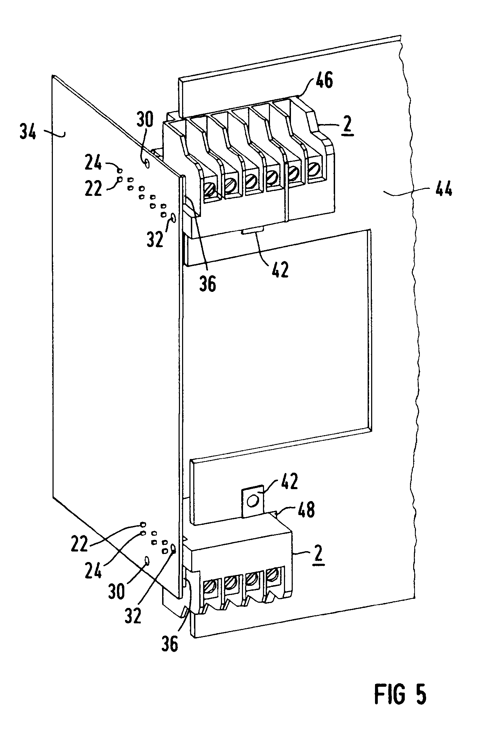

Die Figuren 1 und 3 zeigen jeweils eine perspektivische Darstellung der erfindungsgemäßen mehrpoligen Anschlußklemme 2 von schräg oben, wobei die zugehörige perspektivische Ansicht dieser mehrpoligen Anschlußklemme 2 von schräg unten in den Figuren 2 und 4 jeweils dargestellt sind. Dabei zeigen die Figuren 1 und 2 eine 6-polige Anschlußklemme 2, und die Figuren 3 und 4 eine korrespondierende 4-polige Anschlußklemme 2. Die folgende Beschreibung der erfindungsgemäßen mehrpoligen Anschlußklemme 2 bezieht sich auf die Ausführungen der Figuren 1 bis 4, da die erfindungsgemäßen Details unabhängig von der Polzahl der Klemme 2 ist.

Die mehrpolige Anschlußklemme 2 besteht aus einem Klemmenträger 4 und mehreren Klemmstellen 6 (Pol). Jede Klemmstelle 6 weist einen Klemmkörper, einen Druckübertragungsteil und eine Klemmschraube 8 auf, die im einzelnen nicht näher dargestellt sind. Als Klemmkörper kann im einfachsten Fall eine Platte mit Muttergewinde vorgesehen werden. Als Druckübertragungsteil wird ein Klemmbügel vorgesehen, mit dem die Kontaktkraft auf den Leiter übertragen wird, der zwischen Klemmkörper und Klemmbügel angeordnet ist. Mittel der Klemmschraube 8 bewegt sich der Klemmkörper innerhalb einer Führung 10, die Bestandteil des Klemmenträgers 4 ist. Zwischen den einzelnen Klemmstellen 6 weist der Klemmenträger 4 jeweils einen Steg 12 auf. Dieser Steg 12 ist so dimensioniert, daß niemand mit seinen Händen an die Klemmschraube 8 oder an den Einzelteilen einer jeden Klemmstelle 6 gelangen kann. Somit ist jede Klemmstelle 6 gemäß den Norm-Vorschriften handrückensicher ausgeführt.

Der Klemmenträger 4 besteht bei dieser erfindungsgemäßen mehrpoligen Anschlußklemme 2 aus einem Teil 14, der die mehreren Klemmstellen 6 umfaßt, und aus einem Basisteil 16. Dieses Basisteil 16 ist als schmaler Quaderkörper ausgebildet, auf dem der Klemmstellenteil 14 angeordnet ist. Das Basisteil 16 beinhaltet mehrere Stromschienen, von denen an einer Schmalseite oder einer Stirnseite 18 des Basisteils 16 die freien Enden 20 herausragen. Diese freien Enden 20 sind jeweils als zwei benachbarte Lötpins 22 und 24 ausgebildet. Die Stromschienen im Basisteil 16 verlaufen räumlich parallel, wobei jede Stromschiene in einer Führung geführt und gehalten wird. In der dargestellten Ausführungsform der mehrpoligen Anschlußklemme 2 sind die Stromschienen im Basisteil 16 um 90° gebogen. Die freien Enden der Stromschienen im Basisteil 16 sind jeweils mit einem Druckübertragungsteil einer Klemmstelle 6 elektrisch leitend verbunden. Als elektrisch leitende Verbindung einer Stromschiene mit dem Druckübertragungsteil einer zugehörigen Klemmstelle 6 kann ein Steg vorgesehen sein, oder das Druckübertragungsteil ist mit einer Zunge versehen. Außerdem kann das freie Ende einer jeden Stromschiene im Basisteil 16 derart ausgestaltet sein, daß es in den Klemmstellenteil 14 des Klemmenträgers 4 bis zum Druckübertragungsteil einer jeden Klemmstelle 6 hineinragt. Bei einer vorteilhaften Ausgestaltung sind die Stromschiene und das korrespondierende Druckübertragungsteil einstückig ausgebildet. Bei der Dimensionierung einer jeden Stromschiene und deren Abstand zur benachbarten Stromschiene werden die Luft- und Kriechstrecken gemäß der Norm eingehalten. Somit stehen die Lötanschlüsse (Lötpins 22 und 24) senkrecht zur Klemmstelle 6 (90°-Umlenkung der Anschlüsse).

Außerdem ist das Klemmstellenteil 14 und/oder das Basisteil 16 des Klemmenträgers 4 mit einer Nut 26 und/oder 28 versehen. Diese Fixiernuten 26 und 28 dienen zur Befestigung der mehrpoligen Anschlußklemme 2 in einem Gerätegehäuse (Figur 5). Ferner weist das Klemmstellenteil 14 eine Anschraubstelle 30 auf, die mit der Stirnseite 18 des Basisteils 16 eine Ebene bildet. Eine weitere Anschlußstelle 32 weist die Stirnseite 18 des Basisteils 16 des Klemmenträgers 4 auf. Diese Anschlußstellen 30 und 32 sind beispielsweise als Taschen ausgebildet, in denen jeweils eine Gewindemutter eingelegt ist. Diese Anschlußstellen 30 und 32 dienen zur Befestigung der mehrpoligen Anschlußklemme 2 an einer Leiterplatte 34 eines elektrischen Gerätes (Figur 5). Außerdem weist die Stirnseite des Klemmstellenteils 14 des Klemmenträgers 4 eine Versteifungsrippe 36 auf, die in der Ebene der Stirnseite des Basisteils 16 endet.

Die Stirnseite des Klemmenträgers 4 der mehrpoligen Anschlußklemme 2, d.h. die Seite, an der der Zugang zu den Klemmschrauben 8 ist, auch Vorderseite der mehrpoligen Anschlußklemme 2 genannt, weist einen Platz 38 für eine Beschriftung der einzelnen Klemmstellen 6 (Pole) auf. Die Beschriftung kann in den Klemmenträger 4 eingearbeitet sein oder mittels Siebdruck oder eines Klebeschildes erfolgen. Bei der 6-poligen Ausführungsform der Anschlußklemme 2 ist auf der Vorderseite des Klemmenträgers 2 ein Kennzeichnungssteg 40 eingearbeitet, der die optische Trennung von zwei unterschiedlichen Anschlußfeldern bewirkt.

Den Figuren 2 und 4 ist jeweils zu entnehmen, daß aus dem Basisteil 16 des Klemmenträgers 4 ein Anschlußschienenteil 42 herausragt. Dieses Anschlußschienenteil 42 ist mit einem Druckübertragungsteil einer Klemmstelle 6 der mehrpoligen Anschlußklemme 2 elektrisch leitend verbunden. Dieser Anschlußschienenteil 42 dient einerseits zur Fixierung und Befestigung der mehrpoligen Anschlußklemme 2 mit einem Gerätegehäuse und andererseits als Masse-Verbindung einer Klemmstelle 6 der mehrpoligen Anschlußklemme 2 zu einem Gehäuse eines elektrischen Gerätes (Figur 5).

Die Figur 5 zeigt die Verwendung einer erfindungsgemäßen 6- und 4-poligen Anschlußklemme 2 bei einem elektrischen Gerät, von dem nur eine Leiterplatte 34 und ein Gehäuseteil 44 dargestellt sind. Die 4-polige Anschlußklemme 2 ist spiegelbildlich zur 6-poligen Anschlußklemme 2 an der Leiterplatte 34 angeordnet. Die 6-polige Anschlußklemme 2 könnte für einen Netzanschluß und die 4-polige Anschlußklemme 2 für einen Lastanschluß vorgesehen sein. Diese mehrpoligen Anschlußklemmen 2 sind mit ihren Lötpins 22 und 24 in entsprechende Löcher der Leiterplatte 34 derart gesteckt, daß die Lötpins 22 und 24 mit einem Teil aus der Leiterplatte 34 herausragen. Diese mehrpoligen Anschlußklemmen 2 sind soweit auf die Leiterplatte 34 gesteckt, bis jeweils die Versteifungsrippe 36 des Klemmstellenteils 14 sich mit ihrer Schmalseite auf der Leiterplatte 34 abstützt. Nun werden die Lötpins 22 und 24 der beiden mehrpoligen Anschlußklemme 2 mit der Leiterplatte 34 verlötet, wobei von Hand oder maschinell verlötet werden kann. Nach diesem Lötvorgang wird die Leiterplatte 34 mittels der Anschlußstellen 30 und 32 der mehrpoligen Anschlußklemmen 2 mit diesen Anschlußklemmen 2 verschraubt. Durch diese Verschraubung werden die Lötstellen von schädlichen Schraubendreherkräften entlastet. Diese Leiterplatte 34 mit den beiden mehrpoligen Anschlußklemmen 2 werden dann mit dem Gehäuseteil 44 eines elektrischen Gerätes verbunden. Dazu weist das Gehäuseteil 44 an den entsprechenden Stellen Ausnehmungen 46 und 48 auf. Die Ausnehmungen 46 und 48 sind so gestaltet, daß das Gehäuseteil 44 in die Nuten 26 und 28 der mehrpoligen Anschlußklemme 2 greifen kann. Hat bei diesem Steckvorgang das Gehäuseteil 44 seine Endposition in den Fixiernuten 26 und 28 der mehrpoligen Anschlußklemme 2 erreicht, wird dieses Gehäuseteil 44 endgültig mittels des Anschlußschienenteils 42 fixiert und befestigt, und gleichzeitig wird eine Klemmstelle der mehrpoligen Anschlußklemme 2 mit dem Gehäuseteil 44 elektrisch leitend verbunden (Masse-Verbindung).

Durch diese erfindungsgemäße mehrpolige Anschlußklemme 2 werden bei deren Verwendung keine zusätzlichen Montageteile mehr benötigt, da sie einerseits in eine Leiterplatte eingelötet werden kann und andererseits Mittel zur Befestigung und Fixierung mit einem Gehäuseteil 44 aufweist.

## Patentansprüche

1. Anschlußklemme (2), bestehend aus einem Klemmenträger (4) und einer Klemmstelle (6), die einen Klemmkörper, einen Druckübertragungsteil und eine Klemmschraube (8) aufweist, **dadurch gekennzeichnet,** daß das Druckübertragungsteil einer Klemmstelle (6) mit einer Stromschiene elektrisch leitend verbunden ist, wobei diese Stromschiene in einem Basisteil (16) des Klemmenträgers (4) geführt ist und deren freies Ende aus diesem Basisteil (16) seitwärts herausragt.

2. Anschlußklemme (2) nach Anspruch 1, **dadurch gekennzeichnet,** daß der Klemmenträger (4) an der Seite des herausragenden freien Endes der Stromschiene wenigstens eine Anschraubstelle (32) aufweist.

3. Anschlußklemme (2) nach Anspruch 1, **dadurch gekennzeichnet,** daß die Ober- und/oder Unterseite des Klemmenträgers (4) eine Nut (26,28) aufweist.

4. Anschlußklemme (2) nach Anspruch 1, **dadurch gekennzeichnet,** daß das freie Ende der Stromschiene als zwei benachbarte Lötpins (22,24) ausgestaltet ist.

5. Anschlußklemme (2) nach Anspruch 1, **dadurch gekennzeichnet,** daß die Länge der Stromschiene gemäß der Luft- und Kriechstrecke dimensioniert ist.

6. Mehrpolige Anschlußklemme (2) mit Anschlußklemmen (2) nach einem der vorgenannten Ansprüche, **dadurch gekennzeichnet,** daß die Stromschienen im Basisteil (16) räumlich parallel geführt sind, so daß deren freien Enden seitwärts aufgereiht aus diesem Basisteil (16) des Klemmenträgers (4) herausragen.

7. Mehrpolige Anschlußklemme (2) nach Anspruch 6, **dadurch gekennzeichnet,** daß eine Stromschiene als Anschlußschienenteil (42) der mehrpoligen Anschlußklemme (2) aus dem Klemmenträger (4) herausragt.

8. Mehrpolige Anschlußklemme (2) nach Anspruch 6, **dadurch gekennzeichnet,** daß die einzelnen Klemmstellen (6) der Anschlußklemmen (2) jeweils durch einen Steg (12) voneinander räumlich getrennt sind.

9. Mehrpolige Anschlußklemme (2) nach Anspruch 6, **dadurch gekennzeichnet,** daß die eine Anschraubstelle (30) aufweisende Seite des Klemmenträgers (4) eine Versteifungsrippe (36) aufweist.

10. Mehrpolige Anschlußklemme (2) nach einem der Ansprüche 6 bis 9, **dadurch gekennzeichnet,** daß eine Vorderseite des Klemmenträgers (4) einen Kennzeichnungssteg (40) aufweist.
